(19) Europäisches Patentamt
European Patent Office
Office européen des brevets

(11) Veröffentlichungsnummer: **0 007 662**
**B1**

(12) # EUROPÄISCHE PATENTSCHRIFT

(45) Veröffentlichungstag der Patentschrift: **05.05.82**

(51) Int. Cl.³: **C 21 B 13/08,** C 22 B 7/02, C 22 B 13/02, C 22 B 19/04

(21) Anmeldenummer: **79200381.6**

(22) Anmeldetag: **10.07.79**

(54) **Wälzverfahren zur Verflüchtigung von Zink und Blei aus eisenoxidhaltigen Materialien.**

(30) Priorität: **20.07.78 DE 2831911**

(43) Veröffentlichungstag der Anmeldung: **06.02.80 Patentblatt 80/3**

(45) Bekanntmachung des Hinweises auf die Patenterteilung: **05.05.82 Patentblatt 82/18**

(84) Benannte Vertragsstaaten: **DE FR GB IT SE**

(56) Entgegenhaltungen:
**DE-B-1 032 550**
**US-A-2 310 471**
**US-A-3 754 890**
**STAHL UND EISEN, Vol. 96, Nr. 24, Dezember 1976, Seiten 1228–1232 Düsseldorf, DE.**
**G. MEYER et al.: «Untersuchungen zur Verwertung von Stäuben und Schlämmen aus den Abgasreinigungen von Hochofen- und Blasstahlwerken im Drehrohrofen»**
**STAHL UND EISEN, Vol. 96, Nr. 24, Dezember 1976, Seiten 1239–1245 Düsseldorf, DE.**
**K. SUGASAWA et al.: «Direktreduktion von Hüttenwerksstäuben»**

(73) Patentinhaber: **METALLGESELLSCHAFT AG, Reuterweg 14 Postfach 3724, D-6000 Frankfurt/M.1 (DE)**

(72) Erfinder: **Serbent, Harry, Dr. Dipl.-Ing., Gustav-Hoch-Strasse 5D, D-6450 Hanau (DE)**
Erfinder: **Reuter, Gerhard, Dr. Dipl.-Ing., Steinhausenstrasse 15, D-6000 Frankfurt am Main 70 (DE)**
Erfinder: **Schnabel, Wolfram, Dr. Dipl.-Ing., Goethestrasse 7, D-6234 Hattersheim (DE)**
Erfinder: **Kossek, Günter, Dipl.-Ing., Swakopmunder Strasse 27, D-4100 Duisburg 28 (DE)**

(74) Vertreter: **Fischer, Ernst, Dr., Reuterweg 14, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG.

# Wälzverfahren zur Verflüchtigung von Zink und Blei aus eisenoxidhaltigen Materialien

Die Erfindung betrifft ein Wälzverfahren zur Verflüchtigung von Zink und Blei aus eisenhaltigen und oxidhaltigen Materialien in einem geneigten Drehrohrofen, wobei das Material zusammen mit festem kohlenstoffhaltigem Reduktionsmittel mit hohem Gehalt an flüchtigen, brennbaren Bestandteilen dem Drehrohrofen an seinem oberen Ende aufgegeben wird, die Reduktion und Verflüchtigung unterhalb des Erweichungspunktes der Beschickung erfolgt, metallisches Eisen enthaltendes Gut aus dem unteren Ende des Drehrohrofens ausgetragen wird, Verbrennungsluft in das untere Ende des Drehrohrofens eingesaugt wird und die Abgase aus dem oberen Ende abgesaugt werden.

Das Wälzverfahren dient zur Verarbeitung von Rohstoffen, die verflüchtigungsfähige Metalle bzw. Metallverbindungen enthalten. Es wird insbesondere zur reduzierenden Verflüchtigung von Zink und Blei aus verhältnismässig metallarmen Vorstoffen, wie z.B. entsprechenden Erzen, Zwischenprodukten, Bleischachtofenschlacken, Räumaschen usw., angewandt. Reaktionsaggregat ist der geneigt gelagerte, kontinuierlich betriebene Drehrohrofen. Als Reduktionsmittel dient fester Kohlenstoff, der mit der Beschickung aufgegeben wird und eventuell Kohlenstoff, der in den Rohstoffen ist. Die erforderliche Verbrennungsluft wird in dem Drehrohrofen vom Austragsende eingesaugt. Die Abgase verlassen den Ofen durch das Beschickungsende. Innerhalb der Beschickung laufen zwei Reaktionen in Abhängigkeit voneinander ab: Die Reduktion von z.B. Zinkoxid mittels Kohlenmonoxid

$$ZnO + CO = Zn + CO_2$$

und die Umsetzung des gebildeten Kohlendioxides nach der Boudouard-Reaktion

$$CO_2 + C = 2\,CO,$$

wodurch erneut CO für die Reduktion gebildet wird. Ein Teil des gebildeten CO und das oberhalb seines Siedepunktes anfallende Zink treten in den über der Beschickung liegenden freien Ofenraum ein und werden dort verbrannt. Das dabei gebildete staubförmige Zinkoxid wird mittels Abgasentstaubung gewonnen.

In den Rohstoffen enthaltene Eisenoxide werden ebenfalls reduziert. Das Eisen liegt weitgehend in metallischer Form im Ofenaustragsgut vor. Im Gegensatz zu dem Renn-Wälzverfahren, bei dem in der Schlusszone des Drehrohrofens im teigigen Zustand gearbeitet wird und das metallische Eisen sich zu den sogenannten Luppen verbindet, liegt das metallische Eisen beim Wälzverfahren in feinverteilter Form im Austragsgut vor. Dieses kann bei ausreichend hohen Eisengehalten bei der Roheisen- und Stahlerzeugung eingesetzt werden.

In neuerer Zeit wird das Wälzverfahren in immer grösser werdendem Umfang für die Aufarbeitung und Wiederverwendung der bei der Roheisen- und Stahlerzeugung zwangsläufig anfallenden Reststoffe, wie Stäube und Schlämme der Hochofenwerke, der Sinteranlagen und der Stahl- und Walzwerke, angewendet. Auf diese Weise wird eine Deponie dieser Stoffe vermieden und ihre Metallinhalte können weitgehend wieder nutzbar gemacht werden. Das feste Austragsgut des Drehrohrofens, welches das metallische Eisen enthält, wird im allgemeinen in den Hochofen eingesetzt.

Lange Zeit herrschte die Ansicht, dass für das Wälzverfahren nur Koksgrus und Anthrazite als Reduktionsmittel geeignet wären. In der DE-B-1 032 550 wird zur Verbesserung der Reaktionsgeschwindigkeit der Reduktion Luft durch Düsensteine in die über Düsensteinen befindliche Beschickung in einen Bereich des Ofens eingeblasen, in dem die Beschickung bereits auf die Reduktionstemperatur aufgeheizt ist, z.B. bei einer Temperatur von 600 bis 1000°C. In der DE-A-2 621 969 wird ein Verfahren beschrieben, bei dem als festes Reduktionsmittel eine Mischung aus einem reaktionsfreudigen und einem reaktionsträgen kohlenstoffhaltigen Material in das obere Ende des Drehrohrofens chargiert wird. Der Anteil des reaktionsträgen kohlenstoffhaltigen Materials beträgt vorzugsweise 20–80% und insbesondere 40–60%, bezogen auf den fixen Kohlenstoff. Reaktionsfreudige Reduktionsmittel sind z.B. Braunkohlen oder Lignite, während reaktionsträge z.B. Anthrazite, Gasflammkohlen und Koks sind. Die Höchsttemperatur im Ofen kann zwischen 900–1050°C und vorzugsweise zwischen 950–1000°C eingestellt werden. Durch den kombinierten Einsatz von reaktionsfreudigen und reaktionsträgen Reduktionsmitteln kann einerseits die Durchsatzleistung gesteigert werden, während anderseits die Ansatzbildung verringert wird und gleichzeitig mit relativ geringem Kohlenstoffüberschuss im Austragsgut des Drehrohrofens eine Versinterung der Beschickung sowie eine Reoxidation des gebildeten metallischen Eisens verhindert wird. Im Bereich der Reduktionszone steigt die Temperatur der Beschickung bei verstärktem Wärmeangebot aus den Ofengasen so lange nicht weiter an, bis der Sauerstoffabbau der oxidischen Bestandteile weitgehend abgeschlossen ist. In diesem Bereich wird praktisch die gesamte von den Ofengasen bzw. der Ofenwand angebotene Wärme von der stark endothermen Boudouard-Reaktion innerhalb der Beschickung verbraucht, so dass keine Wärme für die Temperaturerhöhung der Beschickung zur Verfügung steht. Die Temperaturkurve der Beschickung verläuft in diesem Bereich – über die Ofenlänge gesehen – praktisch horizontal und steigt erst nach nahezu abgeschlossenem Sauerstoffabbau zum Austragsende hin an. Durch die unterschiedliche Reaktionsfähigkeit der aufgegebenen Reduktionsmittel wird das Temperaturplateau erniedrigt, da die reaktionsfreudigen Reduktionsmittel temperatursenkend wirken, während der Rest der reaktionsträgen Reduktionsmittel einer Kohlenstoffverarmung in der Schlusszone vorbeugt.

Ein abgewandeltes Wälzverfahren wird in der Weise betrieben, dass der Drehrohrofen ständig mit einem Zentralbrenner und mit Mantelrohren zur Zufuhr von Luft in die Ofenachse arbeitet und Anthrazit als Reduktionsmittel eingesetzt wird («Erzmetall», Band 23 (1970) Heft 3, S. 108–113).

Der Erfindung liegt die Aufgabe zugrunde, die Durchsatzleistung des Wälzverfahrens unter Verwendung billiger Reduktionsmittel zu steigern.

Die Lösung dieser Aufgabe erfolgt erfindungsgemäss dadurch, dass in den Bereich der Aufheizzone, der mit dem Auftreten zündfähiger Teilchen der festen Reduktionsmittel beginnt und bei maximal 50% der Ofenlänge endet, sauerstoffhaltige Gase mittels Düsensteinen in die über Düsensteinen befindliche Beschickung in geregelten Mengen eingeblasen werden. Die festen Reduktionsmittel mit einem hohen Gehalt an flüchtigen, brennbaren Bestandteilen enthalten mehr als 20% solcher Bestandteile und sind z. B. Braunkohlen oder Lignite. Sie können zu 100% oder in Mischung mit festen Reduktionsmitteln mit geringem Gehalt an flüchtigen, brennbaren Bestandteilen, wie z. B. Koks oder Anthrazit, aufgegeben werden.

Das erste Auftreten zündfähiger Teilchen des Reduktionsmittels erfolgt im unteren Teil der abrollenden Oberfläche der Beschickung. Während des Herunterrollens der einzelnen Teilchen auf der Oberfläche des Rollbettes werden die Teilchen von den heissen Ofengasen aufgeheizt und erreichen in einem bestimmten Abstand vom Beschickungsende kurz vor dem Einziehen in das Rollbett erstmalig die Zündtemperatur. An dieser Stelle werden dann erstmalig sauerstoffhaltige Gase mittels Düsensteinen in die Beschickung geblasen. Dadurch wird erreicht, dass die zündfähigen und gezündeten Teilchen des Reduktionsmittels bei ihrem Einziehen in das kältere Innere des Rollbettes nicht wieder unter die Zündtemperatur abgekühlt werden, sondern im Inneren des Rollbettes weiterbrennen. Die nunmehr innerhalb der Beschickung ablaufende Verbrennung bewirkt in der Art einer Kettenreaktion die Freisetzung weiterer flüchtiger, brennbarer Bestandteile und erfasst in kurzer Zeit den gesamten Beschikkungsquerschnitt. Der Wärmeinhalt der flüchtigen brennbaren Bestandteile wird nunmehr voll für die Beschickung ausgenutzt und die zur Wärmeübertragung verfügbare Wärmeaustauschfläche erheblich vergrössert. In bestimmten Abständen von etwa 2,5 bis 3,5 m sind dann in dem Bereich der Aufheizzone weitere Düsensteine angeordnet. Diese Abstände reichen im allgemeinen aus, um genügend Sauerstoff in das Bett einblasen zu können ohne die Konstruktion des Ofens zu schwächen. Die Düsensteine sind an jeder Einblasstelle ringförmig in bestimmten Abständen in radialer Richtung über den Umfang des Ofens verteilt angeordnet, wobei die Abstände auf dem Umfang im allgemeinen ebenfalls 2,5 bis 3,5 m betragen. Durch Steuermechanismen werden jeweils nur die Düsensteine eines jeden Ringes mit sauerstoffhaltigen Gasen beaufschlagt, die sich unter der Beschickung befinden. Als sauerstoffhaltige Gase wird im allgemeinen Luft verwendet. Unter dem Ausdruck «Düsensteine» sind Gaszuführungsvorrichtungen zu verstehen, welche die Ofenwand und die feuerfeste Auskleidung des Drehrohrofens durchdringen und deren Austrittsöffnungen in der Ebene der inneren Oberfläche der feuerfesten Auskleidung oder kurz darüber oder darunter liegen. Die Düsensteine können aus keramischen oder metallischen Werkstoffen bestehen. Die Zufuhr sauerstoffhaltiger Gase in den freien Ofenraum in der Aufheizzone und auch in der Reduktionszone erfolgt durch die in das Austragsende des Drehrohrofens eingesaugte Luft. Unter eingesaugter Luft ist auch zu verstehen, dass die Luft in das Austragsende eingeblasen wird. In beiden Fällen wird die Luft durch das hinter der Abgasreinigung angeordnete Gebläse durch den Ofen gesaugt. Die erforderliche Luftmenge wird durch den vom Gebläse erzeugten Unterdruck geregelt. Es ist auch möglich, den mittels der Düsensteine eingeblasenen sauerstoffhaltigen Gasen brennbare Stoffe, wie z. B. Koksofengas, Raffineriegas, Erdgas oder Erdöl, zuzusetzen. Dadurch kann der Zündvorgang vorverlegt oder beschleunigt werden. Die zugesetzten brennbaren Stoffe können dabei auch zum Teil die Rolle der brennbaren flüchtigen Bestandteile des festen Reduktionsmittels übernehmen, wenn dessen Gehalt an diesen Stoffen geringer ist.

Weiterhin ist es möglich, ölhaltigen Walzenzunder in den Ofen zu chargieren und dessen Ölbestandteile als brennbare flüchtige Bestandteile für die Aufheizung nutzbar zu machen.

Eine vorzugsweise Ausgestaltung der Erfindung besteht darin, dass der Bereich der Aufheizzone, in den sauerstoffhaltige Gase mittels der Düsensteine eingeblasen werden, bei einer Temperatur des Reduktionsmittels von etwa 300°C beginnt und bei einer Temperatur der Beschickung von 800 bis 950°C endet. Die untere Temperatur des Reduktionsmittels wird – wie vorhergehend beschrieben – im unteren Teil der Oberfläche des von der Beschickung gebildeten Rollbettes gemessen, d. h. kurz vor dem Einziehen der Teilchen in das Rollbett. Die obere Temperatur ist die durchschnittliche Temperatur des gesamten Rollbettes der Beschickung, da bei dieser Temperatur bereits ein weitgehender Temperaturausgleich im Rollbett stattgefunden hat. Durch die Wahl dieses Temperaturbereichs wird besonders sichergestellt, dass im unteren Bereich kein Kaltblasen der Beschickung erfolgt und im oberen Bereich die Austreibung der flüchtigen Bestandteile weitgehend abgeschlossen ist.

Eine vorzugsweise Ausgestaltung besteht darin, dass mittels der Düsensteine 10 bis 50% der gesamten in den Drehrohrofen eingeleiteten Sauerstoffmenge eingeblasen werden. Dadurch wird eine besonders gute Aufheizgeschwindigkeit erreicht.

Eine vorzugsweise Ausgestaltung besteht darin, dass als festes kohlenstoffhaltiges Reduktionsmittel mindestens teilweise zerkleinertes Altgummimaterial eingesetzt wird. Insbesondere eignen sich zerkleinerte Autoreifen, die nach entsprechender Zerkleinerung eingesetzt werden. Das Altgummimaterial wird mit der übrigen Beschikkung in das Beschickungsende des Drehrohrofens aufgegeben. Der in den Autoreifen enthaltene Zinkgehalt, bis zu etwa 2%, wird im Wälzofen mit verflüchtigt und mit dem aus der Beschickung verflüchtigten Zink gemeinsam aus den Abgasen abgeschieden. Der in den Autoreifen enthaltene Eisengehalt fällt mit dem reduzierten Eisen der Beschickung zusammen im Ofenaustrag an. Der Einsatz von Altgummimaterial benötigt also keinen zusätzlichen Aufwand, liefert nur verwertbare Produkte und vermeidet die mit einer Deponie oder anderweitigen Aufarbeitung von Altgummi verbundenen Probleme und Kosten.

Eine vorzugsweise Ausgestaltung besteht darin, dass das Altgummimaterial mit einer Korngrösse unter 30 mm aufgegeben wird. Dadurch wird eine gute Vermischung des Altgummimaterials mit der übrigen Beschickung und eine gute Ausnutzung der flüchtigen, brennbaren Bestandteile im Rollbett in der Aufheizzone nach Erreichen der Zündtemperatur erzielt.

Die Vorteile der Erfindung bestehen darin, dass bei der Verwendung einer Mischung aus festen Reduktionsmitteln mit hohem Gehalt an flüchtigen, brennbaren Bestandteilen und solchen mit niedrigem Gehalt an flüchtigen, brennbaren Bestandteilen neben den Vorteilen des Verfahrens gemäss der DE-OS 2 621 969 noch zusätzlich eine beträchtliche Verkürzung der Aufheizzone erfolgt, und die flüchtigen Bestandteile durch Verbrennung im Rollbett weitgehend ausgenutzt werden. Weiterhin ist es möglich, ausschliesslich feste Reduktionsmittel mit einem hohen Anteil an flüchtigen, brennbaren Bestandteilen zu verwenden, da diese im Rollbett ausgenutzt werden können und nicht unverbrannt in den freien Ofenraum gelangen. Da dadurch der gesamte Energieverbrauch vermindert wird, bleibt auch bei alleinigem Einsatz solcher Reduktionsmittel ein grösserer Kohlenstoffüberschuss für die Reduktionszone erhalten und ergibt dort die gleiche Sicherheit in bezug auf Versinterung und Reoxydation. In allen Fällen wird das Temperaturplateau in der Reduktionszone erniedrigt.

Die Erfindung wird anhand von Ausführungsbeispielen näher erläutert.

Eine Mischung aus Hochofengichtschlamm und LD-Staub wurde rolliert und zwecks Reduktion und Verflüchtigung von Blei und Zink einem Wälzofen aufgegeben. Der Ofen hatte eine Länge von 12 m und einen Innendurchmesser von 0,8 m. Das rollierte Material hatte eine Korngrösse von 5 bis 20 mm und enthielt im Trocknen bei 14,3% Nässe: 50,2% Fe, 3,5% Zn, 1,8% Pb, 1,9% $SiO_2$, 11,4% CaO, 0,7% S und 4,1% C. Als Reduktionsmittel diente Braunkohle mit folgender Zusammensetzung: 44% $C_{fix}$, 50% flüchtige Bestandteile und 6% Asche bei 20% Nässe.

Beispiel 1

Der Wälzofen wurde mit 300 kg/h rollierter Mischung beschickt. Der Braunkohlezusatz entsprach 0,5 $C_{fix}$/Fe. Die gesamte Verbrennungsluft wurde vom Ofenaustragsende her eingesaugt. Die Metallisierung des Ofenaustragsgutes betrug im Mittel 98%. Zink und Blei wurden zu mehr als 90% verflüchtigt und konnten in Form eines in Metallhütten einsetzbaren Flugstaubes aus dem Drehrohrofenabgas abgetrennt werden.

Beispiel 2

Im selben Ofen wurden Düsensteine installiert. Bei einer Temperatur des Reaktionsmittels von 300°C, die 2 m vom Ofeneinlauf entfernt erreicht wurde, wurde Luft durch diese Düsensteine in die Beschickung dann eingeblasen, wenn sich diese über den betreffenden Düsensteinen befand. Ein zweiter Ring von Düsensteinen wurde in einer Entfernung von 3,5 m vom Ofeneinlauf angeordnet, in einem Bereich, der kurz oberhalb einer Materialtemperatur von 800°C liegt. Von der gesamten in den Ofen eingebrachten Luftmenge wurden auf diese Weise 30% eingeführt. Die dadurch bewirkte Verkürzung der Aufheizzone des Drehrohrofens ermöglichte eine Steigerung der Durchsatzleistung ohne Verschlechterung der Betriebsergebnisse auf 420 kg/h.

Beispiel 3

Unter den Bedingungen von Beispiel 2 wurde die Braunkohle schrittweise durch zerkleinertes Altreifenmaterial mit einer Stückgrösse von 20 bis 30 mm bis zu 100% ersetzt. Dabei blieben die Betriebsergebnisse praktisch gleich. Das mit den Altreifenschnitzeln eingebrachte Zink wurde praktisch vollständig verflüchtigt und konnte aus dem Drehrohrofenabgas zusammen mit dem Zink aus den Hüttenwerksreststoffen abgeschieden werden.

**Patentansprüche**

1. Wälzverfahren zur Verflüchtigung von Zink und Blei aus eisenhaltigen und oxidhaltigen Materialien in einem geneigten Drehrohrofen, wobei das Material zusammen mit festem kohlenstoffhaltigem Reduktionsmittel mit hohem Gehalt an flüchtigen, brennbaren Bestandteilen dem Drehrohrofen an seinem oberen Ende aufgegeben wird, die Reduktion und Verflüchtigung unterhalb des Erweichungspunktes der Beschickung erfolgt, metallisches Eisen enthaltendes Gut aus dem unteren Ende des Drehrohrofens ausgetragen wird, Verbrennungsluft in das untere Ende des Drehrohrofens eingesaugt wird und die Abgase aus dem oberen Ende abgesaugt werden, dadurch gekennzeichnet, dass in den Bereich der Aufheizzone, der mit dem Auftreten zündfähiger Teilchen der festen Reduktionsmittel beginnt und bei maximal 50% der Ofenlänge endet, sauerstoffhaltige Gase mittels Düsensteinen in die über Düsensteinen befindliche Beschickung in geregelten Mengen eingeblasen werden.

2. Wälzverfahren nach Anspruch 1, dadurch gekennzeichnet, dass der Bereich der Aufheizzone, in den sauerstoffhaltige Gase mittels der Düsensteine eingeblasen wird, bei einer Temperatur des festen Reduktionsmittels von etwa 300°C beginnt und bei einer Temperatur der Beschickung von 800 bis 950°C endet.

3. Wälzverfahren nach Anspruch 1 oder 2, dadurch gekennzeichnet, dass mittels der Düsensteine 10 bis 50% der gesamten in den Drehrohrofen eingeleiteten Sauerstoffmenge eingeblasen werden.

4. Wälzverfahren nach den Ansprüchen 1 bis 3, dadurch gekennzeichnet, dass als festes kohlenstoffhaltiges Reduktionsmittel mindestens teilweise zerkleinertes Altgummimaterial eingesetzt wird.

5. Wälzverfahren nach Anspruch 4, dadurch gekennzeichnet, dass das Altgummimaterial mit einer Korngrösse unter 30 mm aufgegeben wird.

**Claims**

1. A waelz process of volatilizing zinc and lead from iron-containing and oxide-containing material in an inclined rotary kiln, which is charged at its upper end with the material together with solid carbonaceous reducing agent having a high content of volatile combustible constituents, wherein the reduction and volatilization are effected below the softening point of the charge, metallic iron-containing material is discharged from the lower end of the rotary kiln, combustion air is sucked into the lower end of the rotary kiln, and the exhaust gases are sucked from the upper end, characterized in that oxygen-containing gases are blown at controlled rates through tubular air nozzles into the charge disposed over nozzle blocks in that region of the heating-up zone which begins where ignitable particles of the solid reducing agent begin to occur and which terminates at up to 50% of the length of the kiln.

2. A waelz process according to claim 1, characterized in that oxygen-containing gas is blown through the tubular air nozzles into the heating-up zone in a region which begins where the reducing agent has a temperature of about 300°C and which terminates where the charge has a temperature of 800 to 950°C.

3. A waelz process according to claim 1 or 2, characterized in that 10 to 50% of the entire quantity of oxygen fed into the rotary kiln are blown through the tubular air nozzles.

4. A waelz process according to claims 1 to 3, characterized in that the solid carbonaceous reducing agent consists at least in part of disintegrated waste rubber.

5. A waelz process according to claim 4, characterized in that the waste rubber which is fed has a particle size below 30 mm.

**Revendications**

1. Procédé d'enlèvement du zinc et du plomb de matières contenant du fer et des oxydes par volatilisation dans un four tubulaire tournant incliné, qui consiste à charger la matière, ainsi qu'un agent réducteur carboné solide à teneur élevée en constituants volatils combustibles, à l'extrémité supérieure du four tubulaire tournant, à effectuer la réduction et la volatilisation en dessous du point de ramollissement du chargement, à décharger du produit contenant du fer métallique de l'extrémité inférieure du four tubulaire tournant, à aspirer de l'air de combustion dans l'extrémité inférieure du four tubulaire tournant et à évacuer les gaz d'échappement par l'extrémité supérieure, caractérisé en ce qu'il consiste, dans la région de la zone de chauffage, qui commence avec l'apparition de particules inflammables des agents réducteurs solides et qui se termine au plus à 50% de la longueur du four, à insuffler, en des quantités réglées, des gaz contenant de l'oxygène à l'aide de buses dans le chargement se trouvant au dessus des buses.

2. Procédé suivant la revendication 1, caractérisé en ce que la région de la zone de chauffage, dans laquelle on insuffle des gaz contenant de l'oxygène à l'aide des buses, commence à une température de l'agent réducteur solide de 300°C environ et se termine à une température du chargement de 800 à 950°C.

3. Procédé suivant la revendication 1 ou 2, caractérisé en ce qu'il consiste à insuffler à l'aide des buses de 10 à 50% de la quantité totale d'oxygène envoyée dans le four tubulaire tournant.

4. Procédé suivant les revendications 1 à 3, caractérisé en ce qu'il consiste à utiliser comme agent réducteur carboné solide du vieux caoutchouc au moins partiellement fragmenté.

5. Procédé suivant la revendication 4, caractérisé en ce qu'il consiste à charger du vieux caoutchouc ayant une granulométrie inférieure à 30 mm.